# EUROPÄISCHE PATENTANMELDUNG

(11) **EP 1 566 254 A2**
(43) Veröffentlichungstag der Anmeldung: **24.08.2005**
(21) Anmeldenummer: 05003205.1
(22) Anmeldetag: 15.02.2005
(51) Int. Cl.: B29C 44/14, B29C 59/08

(54) **Verfahren zum Herstellen eines Fahrzeugkarosserieanbauteils sowie Karosserieanbauteil**

(30) Priorität: 23.02.2004 DE 102004008718
(71) Anmelder: ArvinMeritor GmbH, 63128 Dietzenbach (DE)
(72) Erfinder: Niesner, Tobias, 38440 Wolfsburg (DE); Goetzke, Hans Hermann, 38519 Vechelde (DE); Schaper, Andre, 38159 Vechelde (DE)
(74) Vertreter: Kitzhofer, Thomas

(57) **Zusammenfassung**

Ein Verfahren zum Herstellen eines Karosserieanbauteils sieht vor, daß die die Außenhaut des Fahrzeugs bildende Kunststoffolie (14) vor dem Tiefziehen rückseitig beflammt, insbesondere silikatisiert wird. Anschließend wird die Kunststoffolie (14) rückseitig hinterschäumt oder hinterspritzt.

## Beschreibung

Die Erfindung betrifft ein Verfahren zum Herstellen eines Fahrzeugkarosserieanbauteils sowie ein Fahrzeugkarosserieanbauteil.

Karosserieanbauteile sind solche Teile des Fahrzeugs, die mit dem Fahrzeugrahmen verbunden sind und im fertig montierten Zustand des Fahrzeugs zumindest Abschnitte der Fahrzeugaußenhaut definieren. Insbesondere betrifft die Erfindung ein sogenanntes Dachmodul in Form eines Verbundbauteils, das auf dem Dachrahmen vorzugsweise durch Kleben befestigt ist und nahezu das gesamte Fahrzeugdach definiert. Andere Fahrzeugkarosserieanbauteile sind beispielsweise Klappen, Türen, Kotflügel oder Stoßfänger.

Karosserieanbauteile können in einer hervorragenden Oberflächenqualität dadurch hergestellt werden, daß eine tiefgezogene, durchgefärbte, dünne Kunststoffolie rückseitig hinterschäumt wird. Damit der flüssige Kunststoff auf der Kunststoffolie hält, wird diese unmittelbar vor der Hinterschäumung flammbehandelt. Dabei wird die Folie rückseitig mit einer Gasflamme überstrichen und aktiviert. Bei dieser sogenannten Aktivierung werden Molekülketten an der Oberfläche der Kunststoffolie aufgebrochen. Sauerstoff und Hydroxylgruppen lagern sich an den aufgebrochenen Molekülketten an. Zugleich erfolgt auch eine Reinigung der Oberflächen und eine Mikroaufrauhung, die ebenfalls für eine bessere Verbindung zwischen der Kunststoffolie und dem PU-Material sorgen. Darüber hinaus wird die bisher unpolare Oberfläche zu einem bestimmten Maße polarisiert und die Benetzbarkeit erhöht. Es ist bekannt, bei diesem Beflammen dem Brenngas-Luftgemisch eine verdampfbare Siliziumverbindung (insbesondere Silan) oder organische Siliziumverbindungen beizumischen, man spricht vom sogenannten Silikatisierungsverfahren.

Die Beflammung, gegebenenfalls das Silikatisierungsverfahren, ist ein Verfahrensschritt, der mit hohen Ausschußraten verbunden ist, da es aufgrund der hohen Auszugsgrade beim Tiefziehprozeß und der damit verbundenen Folienverstreckung beim Beflammen oder Silikatisieren sehr leicht zur Beschädigung der Folie kommen kann. Darüber hinaus wird das Beflammen meist manuell durchgeführt, so daß hier die angestrebten geringen Ausschußraten nur bei sehr erfahrenem Personal erzielbar sind.

Aufgabe der Erfindung ist es, ein Verfahren zum Herstellen eines Karosserieanbauteils so zu verbessern, daß sich eine höhere Prozeßsicherheit ergibt.

Dies wird bei einem erfindungsgemäßen Verfahren durch folgende Schritte erreicht:
a) eine die Außenhaut des Fahrzeugs wenigstens teilweise definierende Kunststoffolie wird rückseitig beflammt,
b) die Kunststoffolie wird plastisch umgeformt und
c) die Folie wird rückseitig hinterschäumt oder hinterspritzt.

Beim erfindungsgemäßen Verfahren wird die Kunststoffolie vor ihrer plastischen Umformung, also üblicherweise vor dem Tiefziehen beflammt. In diesem Zustand ist die Folie ebener als nach dem Umformprozeß, vorzugsweise sogar vollständig eben und mit konstanter Materialstärke (ca. 0,5 bis 1,5 mm), so daß keine Abschnitte mit hohen Auszugsgraden vorhanden sind und die Beflammung einfacher und gleichmäßiger erfolgen kann. Wie sich überraschend herausgestellt hat, wird die durch die Beflammung erzielte Aktivierung der Folie beim Umformprozeß nicht rückgängig gemacht. Durch das erfindungsgemäße Verfahren können die Ausschußraten verringert werden, darüber hinaus ist eine sehr einfache automatisierte Beflammung und damit eine Dokumentierbarkeit dieses Verfahrensschritts möglich.

Wie bereits erläutert, sieht die bevorzugte Ausführungsform eine Silikatisierung der Rückseite der Folie vor, die durch Beimischen einer verdampfbaren Siliziumverbindung, wie Silane oder Organosilane, erreicht wird. Eine extrem dünne Schicht einer Siliziumverbindung, insbesondere eines Siliziumoxids SiOₓ (bei x ungefähr 2), schlägt sich auf der Rückseite der Kunststoffolie nieder. Diese nur wenige Nanometer dicke Schicht hat eine gewisse Rauhigkeit und erhöht die Haftoberflächenspannung. Sie wirkt auch als Diffusionssperrschicht.

Wie bereits erläutert, sollte die gesamte Rückseite im hinterschäumten Teil auch vollflächig mit der Schicht versehen sein.

Für das Hinterschäumen wird bevorzugt flüssiges PU-Material aufgetragen.

Die Erfindung betrifft auch ein Karosserieanbauteil, das eine tiefgezogene, mit PU-Material hinterschäumte oder hinterspritzte Kunststoffolie aufweist, die teilweise die Außenhaut der Karosserie definiert. Rückseitig ist eine dünne Schicht aus einer Siliziumverbindung, insbesondere SiOₓ, auf die Kunststoffolie aufgetragen. An diese dünne Schicht grenzt das PU-Material.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines durch das erfindungsgemäße Verfahren hergestellten Dachmoduls im eingebauten Zustand
- Figuren 2 bis 4 aufeinanderfolgende Schritte des erfindungsgemäßen Verfahrens zum Herstellen des Dachmoduls nach Figur 1.

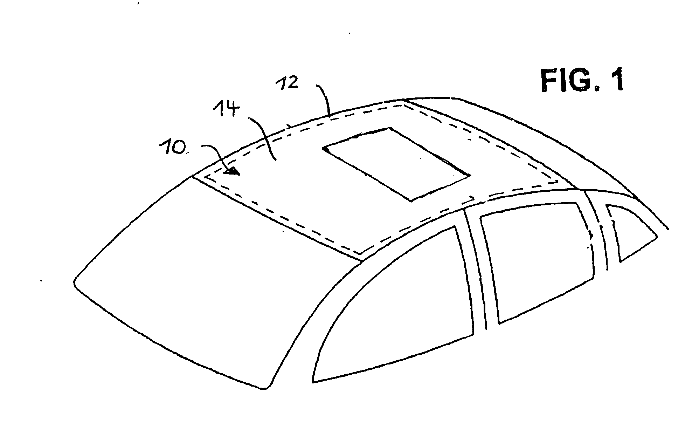

In Fig. 1 ist ein Fahrzeugkarosserieanbauteil in Form eines Dachmoduls 10 dargestellt. Das Dachmodul 10 ist ein Kunststoffverbundbauteil, welches auf den Dachrahmen 12 aufgeklebt ist und im Bereich des Daches die Außenhaut des Fahrzeugs definiert. Das Dachmodul besteht außenseitig aus einer dünnen durchgefärbten Kunststoffolie 14, die rückseitig hinterschäumt ist.

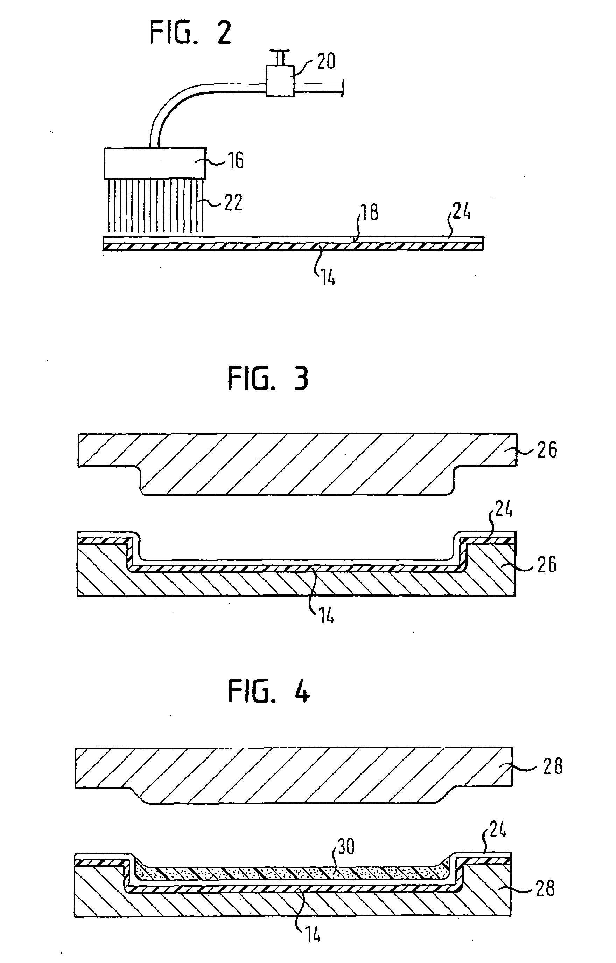

Das Verfahren zum Herstellen des Dachmoduls 10 wird anhand der Figuren 2 bis 4 im folgenden erläutert.

Zuerst wird die plastisch noch nicht umgeformte, ebene Kunststoffolie 14 beflammt. Hierzu wird ein Brenner 16 längs der Rückseite 18 der Folie 14 verfahren, wobei dem Brenngas-Luftgemisch in einem Dosierventil 20 eine verdampfbare Siliziumverbindung, wie Silane oder organische Siliziumverbindungen beigemischt wird. Die Flamme trägt das Bezugszeichen 22.

Beim Beflammen schlägt sich auf der Rückseite 18 eine Siliziumverbindung als wenige Nanometer dicke Schicht 24 aus SiOₓ mit x etwa 2, nieder. Die Schicht ist in Fig. 2 extrem überhöht dargestellt.

Im nächsten Verfahrensschritt wird die aktivierte Kunststoffolie 14 in ein Tiefziehwerkzeug 26 gelegt und dort plastisch umgeformt. Fig. 3 zeigt das Tiefziehwerkzeug nach dem Umformen im geöffneten Zustand.

Die tiefgezogene Folie 14 wird schließlich in ein Schäumwerkzeug 28 gelegt, wo rückseitig auf die Schicht 24, die die ganze Rückseite 18 der Folie 14 bedeckt, flüssiges PU-Material 30 aufgetragen wird. Anschließend wird das Schäumwerkzeug 28 geschlossen, und das PU-Material schäumt aus.

Die in den Figuren 3 und 4 gezeigten Verfahrensschritte können natürlich auch in einem kombinierten Werkzeug durchgeführt werden.

Das in Fig. 4 gezeigte, fertige Karosserieanbauteil wird schließlich dem Schäumwerkzeug 28 entnommen und randseitig beschnitten.

Bevorzugt wird nicht nur flüssiges PU-Material rückseitig auf die Folie 14 aufgetragen, sondern es werden Glasfaserabschnitte im sogenannten LFI-Verfahren (Long-Fiber-Injection) beim Auftragen in die Kunststoffschicht eingebracht.

Anstatt des in Fig. 4 gezeigten Hinterschäumens kann natürlich auch in einem entsprechend ausgeführten Werkzeug ein Hinterspritzen der Folie 14 erfolgen.

## Patentansprüche

1. Verfahren zum Herstellen eines Fahrzeugkarosserieanbauteils, **gekennzeichnet durch** folgende Schritte:
a) eine die Außenhaut des Fahrzeugs wenigstens teilweise definierende Kunststoffolie (14) wird rückseitig beflammt,
b) die Kunststoffolie (14) wird plastisch umgeformt und
c) die Kunststoffolie (14) wird rückseitig hinterschäumt oder hinterspritzt.

2. Verfahren nach Anspruch 1, **dadurch gekennzeichnet, daß** dem bei der Beflammung verbrennenden Brenngas-Luftgemisch eine verdampfbare Siliziumverbindung beigemischt wird, welche sich als Schicht (24) auf der Rückseite (18) der Kunststoffolie (14) niederschlägt.

3. Verfahren nach Anspruch 2, **dadurch gekennzeichnet, daß** die Siliziumverbindung ein Siliziumoxid ist.

4. Verfahren nach Anspruch 2 oder 3, **dadurch gekennzeichnet, daß** die Schicht (24) vollflächig auf die Rückseite (18) der Folie (14) aufgebracht wird.

5. Verfahren nach einem der vorhergehenden Ansprüche, **dadurch gekennzeichnet, daß** die Kunststoffolie (14) im Schritt b) tiefgezogen wird.

6. Verfahren nach einem der vorhergehenden Ansprüche, **dadurch gekennzeichnet, daß** die Kunststoffolie (14) im Schritt c) mit flüssigem PU-Material hinterschäumt wird.

7. Verfahren nach einem der vorhergehenden Ansprüche, **dadurch gekennzeichnet, daß** die Kunststoffolie (14) im Schritt a) eben ist.

8. Karosserieanbauteil, **dadurch gekennzeichnet, daß** es eine hinterschäumte oder hinterspritzte, tiefgezogene, die Außenhaut des Fahrzeugs definierende Kunststoffolie (14) hat, auf die rückseitig eine dünne Schicht (24) aus einer Siliziumverbindung aufgetragen ist, an die wiederum die Hinterschäumung oder Hinterspritzung angrenzt.

9. Karosserieanbauteil nach Anspruch 8, **dadurch gekennzeichnet, daß** die Kunststoffolie (14) mit PU-Material hinterschäumt ist.

10. Karosserieanbauteil nach Anspruch 8 oder 9, **dadurch gekennzeichnet, daß** die Schicht (24) aus einem Siliziumoxid besteht.
